# EUROPEAN PATENT APPLICATION

(11) **EP 1 717 656 A2**
(43) Date of publication of application: **02.11.2006**
(21) Application number: 06008046.2
(22) Date of filing: 19.04.2006
(51) Int. Cl.: G05B 19/408, G05B 19/4093

(54) **Interface device for programming and controlling working parameters of operating machines**

(30) Priority: 20.04.2005 IT mi20050706
(71) Applicant: Preo S.r.l., Corsico MI (IT)
(72) Inventor: Terzaghi, Giuseppe, Saronno (VA) (IT)
(74) Representative: Raimondi, Margherita

(57) **Abstract**

Interface device for programming and controlling the working parameters (°T,t) of operating machines, comprising a screen (100) which shows at least one fixed image (110) corresponding to the machine part whose working parameters must be programmed, said fixed image (110) being associated with means (112) providing a variable graphic indication (112a) of the actual value of the controlled parameter, there also being envisaged at least one area (140) for displaying the numerical value programmed for the parameter to be controlled and a control knob (200) which can be operated by the user and is suitable for selection of the parameter to be controlled and for entering the value to be programmed for said parameter.

## Description

The present invention relates to an interface device for programming and controlling the operating parameters of an operating machine and an operating machine provided with said interface device.

It is known in the technical sector relating to gluing machines that there exists the need to program various parameters in order to allow the operator to enter the working cycle during which, for example, it is required to set and adjust frequently the temperatures for melting, conveying and supplying the glue which usually consists of thermoplastic material.

Generally, even when cold glues (of the vinyl type) are used, it is also required to program the timing for dispensing the glue, which usually must by synchronized with the movement of the parts to be glued.

It is also known that all gluing machines incorporate, consequently, a series of thermostats and timers which can be adjusted by the user by means of corresponding devices.

The more conventional models have separate devices for adjusting the temperature and the timing of each part; this system has a simple design, but may be complex and costly to construct since it requires a large number of wires.

Moreover, the operator must operate a different control device in each case.

Gluing machines which are provided with a mini-computer having an interface with keypad, numerical display and led of the standard type are also known.

This solution allows a better integration and therefore a certain reduction in the assembly costs, but requires that the operator introduce codes, use complicated keyboard combinations and interpret signals which are often cryptic and not sufficiently intuitive, in order to achieve the desired programming.

The technical problem which is posed, therefore, is to provide an interface device for programming and controlling the process parameters of operating machines, in particular, gluing machines, which allows easy and intuitive programming by means of a reduced number of control devices and with less need to introduce complex codes and functions.

Within the scope of this problem it is also required that this device should have small dimensions, be easy and inexpensive to produce and assemble and be able to be easily installed both on new machines and on machines which are already operational.

These results are achieved according to the present invention by an interface device for programming and controlling the working parameters (°T,t) of operating machines, comprising a screen which shows at least one fixed image corresponding to the machine part whose working parameters must be programmed, said fixed image being associated with means providing a variable graphic indication of the actual value of the controlled parameter, there being envisaged at least one area for displaying the numerical value programmed for the parameter to be controlled and at least one control knob which can be operated by the user and is suitable for selection of the parameter to be controlled and for entering the value to be programmed for said parameter.

The present invention furthermore relates to an operating machine provided with an interface device as described above.

Further details may be obtained from the following description of a non-limiting example of embodiment of the subject of the present invention provided with reference to the accompanying drawings, in which:
- Figure 1 shows a schematic view of the device according to the present invention in the rest condition; and
- Figure 2 shows a view similar to that of Fig. 1 during programming and/or control of the device.

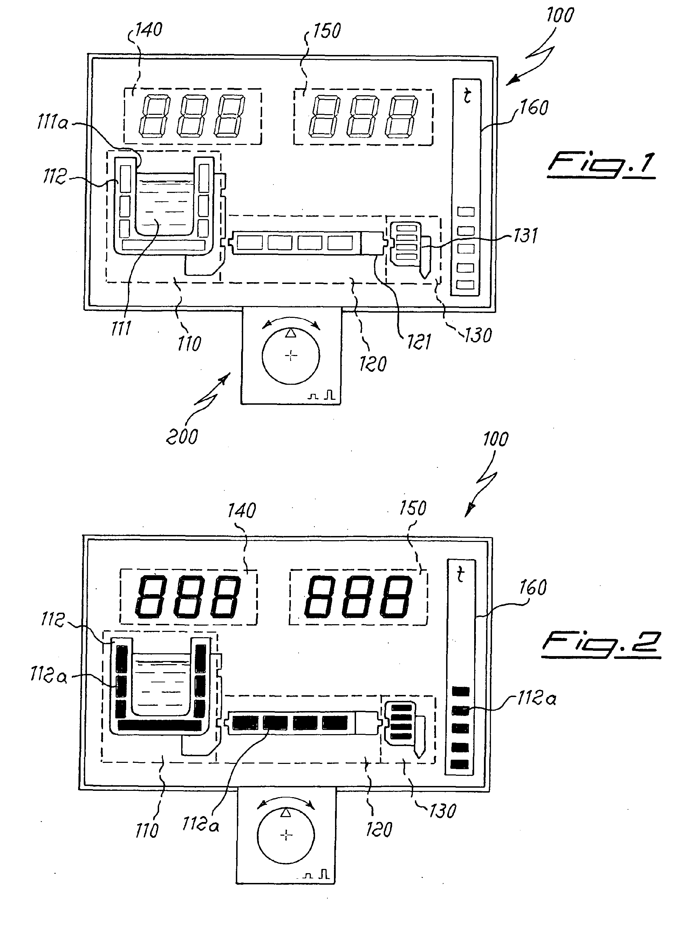

As shown in Fig. 1, the device according to the invention comprises a screen 100 which has, graphically identified thereon, a plurality of areas representing the various process stages and/or parts of an operating machine, for example a gluing machine, and areas displaying the values of the parameters entered as well as a knob 200 able to allow the selection and programming of the values of the process parameters of the machine.

In greater detail the screen 100 comprises a graphical representation 110 of the tank 111 containing the glue, at least one side 111a of which - there being three in the example shown - is associated with a diagram 112 comprising bars 112a representing the value reached by the particular parameter, i.e. the temperature °T of the tank, which must be programmed and controlled.

Similarly, it is envisaged that graphic areas, 120 and 130, respectively, representing the temperature of the dispensing pipe 121 and the tank 131 for the glue, may also be shown on the screen.

A further area 160 for graphically representing the glue dispensing time (t), associated with a code system comprising bars 112a similar to those already described, is also envisaged.

In a further embodiment it is envisaged that the graphical representation of the time for activation of a working step may also be associated with different parameters by means of selection of the said parameter. Advantageously it is envisaged that all the graphically represented areas are defined by thin perimetral lines and that the associated delimited areas are filled/emptied in a contrasting manner by means of coloured bars 112a or the like, depending on the increase/decrease in the actual value reached for the corresponding parameter.

In addition to the graphical representation of the various process stages and/or machine parts on the screen 100, at least one first area 140 displaying the numerical value entered for the specific parameter and at least one second area 150 for displaying the actual numerical value of the said parameter are also present. Preferably, said area 140 displaying the numerical value of the parameter being programmed is a digital display.

Said knob 200, associated with the display screen 100, is able to perform translatory movements in both senses along the direction of its longitudinal axis and rotational movements in both senses about the said axis.

The translatory movements (pressure/release) allow the selection in sequence of the various parameters to be programmed, while the rotational movements allow the increase (clockwise rotation) and decrease (anticlockwise rotation) of the value programmed for the parameter in that selected moment.

The operating principle of the interface device is as follows:
- once the interface device has been prepared and connected to a gluing machine;
- the knob 200 is pressed a first time to select the first parameter to be programmed;
- following selection, the screen indicates, for example by means of flashing, a symbol °T/t corresponding to the graphical representation of the parameter; and
- the display 140 showing the value to be entered for the existing parameter is activated;
- the knob 200 is rotated in one direction or the other in order to reach the desired value of the existing parameter until the desired numerical value can be read off the display 140;
- once the predefined value programmed for the existing parameter is reached, the knob is released, causing storage of the programmed value and sending thereof to the devices (per se conventional and therefore not described in detail) for managing and controlling the process, so that associated processing and implementation may be performed;
- pressing again the knob 200 activates programming of the next parameter which may also be ignored by further pressing of the knob until activation of the parameter to be programmed is reached;
- the definitive confirmation of the value(s) entered for the parameter(s) also activates the control devices which, once the actual values °T/t of the various parameters have been sensed, will correspondingly initiate the graphical display of said values by means of the bar code system 112a and shading of the depicted areas depending on the actual value reached.

Preferably the screen is of the LCD type.

It is therefore clear how with the device according to the invention it is possible to reduce the number of control devices which the user must select as well as the amount of wiring to be performed, resulting, however, in easy and intuitive programming and control of the parameters of the various working steps of an operating machine, in particular a gluing machine.

## Claims

1. Interface device for programming and controlling the working parameters (°T,t) of operating machines, **characterized in that** it comprises a screen (100) which shows at least one fixed image (110) corresponding to the machine part whose working parameters must be programmed, said fixed image (110) being associated with means (112) providing a variable graphic indication (112a) of the actual value of the controlled parameter, there also being envisaged at least one area (140) for displaying the numerical value programmed for the parameter to be controlled and a control knob (200) which can be operated by the user and is suitable for selection of the parameter to be controlled and for entering the value to be programmed for said parameter.

2. Device according to Claim 1, **characterized in that** the areas (110,120,130) for fixed display of the parts of the machine are delimited by thin lines.

3. Device according to Claim 1, **characterized in that** said means (112) providing a variable graphic indication of the actual value of the parameter consist of a bar code system (112a).

4. Device according to Claim 1, **characterized in that** said area (140) for displaying the numerical value of the parameter being programmed is a digital display.

5. Device according to Claim 1, **characterized in that** it comprises at least one area (160) for graphically representing the time parameter (t) for activation of the various parts/phases of the machine.

6. Device according to Claim 1, **characterized in that** it comprises at least one area (150) for displaying the actual numerical value of the selected parameter (°T/t).

7. Device according to Claim 1, **characterized in that** said knob (200) is able to perform translatory movements in both senses along the direction of the longitudinal axis of the knob.

8. Device according to Claim 1, **characterized in that** said knob (200) is able to perform rotational movements in both senses about its longitudinal axis.

9. Device according to Claim 1, **characterized in that** it is able to perform translatory movements in both senses along the direction of its longitudinal axis and rotational movements in both senses about the said axis.

10. Operating machine comprising an interface device for programming and controlling the working parameters (°T,t) of the machine, **characterized in that** said interface device comprises a screen (100) which shows at least one fixed image (110) corresponding to the machine part whose working parameters must be programmed, said fixed image (110) being associated with means (112) providing a variable graphic indication (112a) of the actual value of the controlled parameter, there also being envisaged at least one area (140) for displaying the numerical value programmed for the parameter to be controlled and a control knob (200) which can be operated by the user and is suitable for selection of the parameter to be controlled and for entering the value to be programmed for said parameter.

11. Machine according to Claim 10, **characterized in that** the areas (110,120,130) for fixed display of the parts of the machine are delimited by thin lines.

12. Machine according to Claim 10, **characterized in that** said means (112) providing a variable graphic indication of the actual value of the parameter consist of a bar code system (112a).

13. Machine according to Claim 10, **characterized in that** said area (140) for displaying the numerical value of the parameter being programmed is a digital display.

14. Machine according to Claim 10, **characterized in that** it comprises at least one area (160) for graphically representing the time parameter (t) for activation of the various parts/phases of the machine.

15. Machine according to Claim 10, **characterized in that** it comprises at least one area (150) for displaying the actual numerical value of the selected parameter (°T/t).

16. Machine according to Claim 10, **characterized in that** said knob (200) is able to perform translatory movements in both senses along the direction of the longitudinal axis of the knob.

17. Machine according to Claim 10, **characterized in that** said knob (200) is able to perform rotational movements in both senses about its longitudinal axis.

18. Machine according to Claim 10, **characterized in that** it is able to perform translatory movements in both senses along the direction of its longitudinal axis and rotational movements in both senses about the said axis.

19. Operating machine according to Claim 10, **characterized in that** it is a gluing machine.

20. Machine according to Claim 19, **characterized in that** the parameter to be programmed and controlled is the temperature of the glue tank (111).

21. Machine according to Claim 19, **characterized in that** the parameter to be programmed and controlled is the temperature of the glue supply pipe.

22. Machine according to Claim 19, **characterized in that** the parameter to be programmed and controlled is the temperature of the glue dispensing gun.

23. Machine according to Claim 19, **characterized in that** the parameter to be programmed and controlled is the time.

24. Machine according to Claim 23, **characterized in that** the parameter to be programmed and controlled is the glue dispensing time.
